# EUROPÄISCHE PATENTANMELDUNG

(11) **EP 2 755 177 A1**
(43) Veröffentlichungstag der Anmeldung: **16.07.2014**
(21) Anmeldenummer: 13151338.4
(22) Anmeldetag: 15.01.2013
(51) Int. Cl.: G06Q 20/08

(54) **System, Verfahren, Vorrichtung und Medium zum Automatisieren einer Transaktion**

(71) Anmelder: Wednesday IP UG (haftungsbeschränkt), vormals ISARICE UG (haftungsbeschränkt), 40545 Düsseldorf (DE)
(72) Erfinder: Arnold, Dr. Bernhard, 40545 Düsseldorf (DE); Bindl, Thomas, 80333 München (DE)
(74) Vertreter: Stolmár & Partner

(57) **Zusammenfassung**

System (30; 40; 50; 60) zum Automatisieren einer Transaktion, umfassend einen Rechner (100) zum Erzeugen, mittels Transaktionsdaten der Transaktion, einer Transaktionsaufforderung (700) mit einer System-eindeutigen Transaktionsidentifikationsnummer (710, 7100) für die Transaktion an, auf oder in einem Medium (7), einen Rechner (600), der über eine Kommunikationsverbindung (5₁₋₆) mit dem Rechner (100) zum Erzeugen der Transaktionsaufforderung (700) verbindbar ist, zum Speichern der System-eindeutigen Transaktionsidentifikationsnummer (710, 7100) und von Transaktionserledigungsdaten, ein Endgerät (200) zum Erfassen der System-eindeutigen Transaktionsidentifikationsnummer (710, 7100) von dem Medium (7) und zum Vorbereiten der Transaktion, und einen Rechner (300), der über eine Kommunikationsverbindung (5₂₋₃) mit dem Endgerät (200) verbindbar ist, zum Empfangen und Ausführen der vorbereiteten Transaktion, wobei die Systemeindeutige Transaktionsidentifikationsnummer (710, 7100) und die Transaktionserledigungsdaten an den Rechner (600) zum Speichern der System-eindeutigen Transaktionsidentifikationsnummer (710, 7100) und der Transaktionserledigungsdaten oder an den Rechner (100) zum Erzeugen der Transaktionsaufforderung (700) übertragen werden, wenn die vorbereitete Transaktion ausgeführt worden ist, sowie korrespondierende Vorrichtungen, Verfahren, Medien und Computerprogrammprodukte.

## Beschreibung

### Gebiet der Erfindung

Die Erfindung betrifft ein System, ein Verfahren, Vorrichtungen und ein Medium zum Automatisieren einer Transaktion, insbesondere zum Vereinfachen von Transaktionen, beispielsweise Bezahlvorgängen.

### Stand der Technik

Aktuell werden Überweisungsdaten millionenfach manuell übertragen. Das kostet Zeit und ist fehleranfällig.

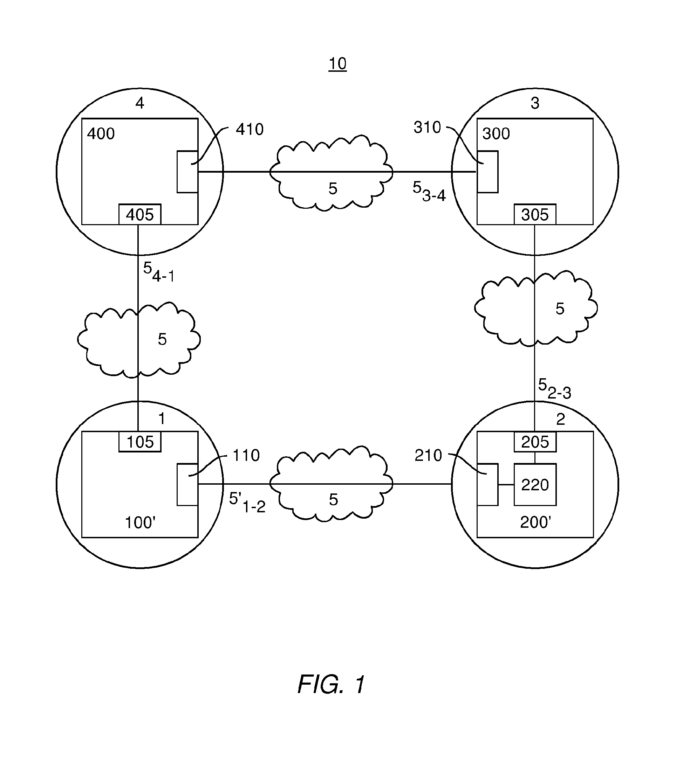

Fig. 1 zeigt ein Transaktionssystem 10 gemäß dem Stand der Technik mit einem Rechnungssteller 1, einem Rechnungsempfänger 2, einer Bank 3 des Rechnungsempfängers und einer Bank 4 des Rechnungsstellers, die beispielsweise über Post und Telekommunikation 5 miteinander in Verbindung stehen. Der Rechnungssteller 1 hat einen Rechner 100' mit einer Schnittstelle 105 und einem Drucker 110. Der Sender 1 schickt eine ausgedruckte Rechnung über eine Kommunikationsverbindung 5'₁₋₂ an den Empfänger 2. Der Rechnungsempfänger 2 hat einen Rechner 200' mit einer Schnittstelle 205 und einer Tastatur 210. Der Empfänger 2 erledigt die Zahlung der Rechnung durch Eingaben über die Tastatur 210. Die Bank 3 des Rechnungsempfängers hat einen Rechner 300 mit Schnittstellen 305 und 310, wobei die Schnittstelle 305 über eine Kommunikationsverbindung 5₂₋₃ mit der Schnittstelle 205 des Rechners 200' des Empfängers 2 verbunden ist. Die Bank 4 des Rechnungsstellers hat einen Rechner 400 mit Schnittstellen 405 und 410, wobei die Schnittstelle 405 über eine Kommunikationsverbindung 5₄₋₁ mit der Schnittstelle 105 des Rechners 100' des Senders 1 und die Schnittstelle 410 über eine Kommunikationsverbindung 5₃₋₄ mit der Schnittstelle 310 des Rechners 300 der Bank 3 des Empfängers verbunden sind.

Rechnungen werden liegen gelassen, bis der Empfänger die Ruhe und Zeit findet, sie zu tätigen. Deshalb werden oft Mahnungen verschickt, obwohl die Zahlung bereits veranlasst ist. Darin berechnete Mahngebühren müssen dann, nach Prüfung, wieder gutgeschrieben werden. Durch einen späteren Zahlungseingang steht dem Rechnungssteller das Geld erst später zur Verfügung, oder es entstehen Kosten für die Kapitalbeschaffung zur Zwischenfinanzierung.

Schreibfehler, beispielsweise bei Kontonummer oder Bankleitzahl führen zu Rückbuchungen, die die Banken oft mit separater Post melden. Ein Rechnungszahler muss den Vorgang erst manuell und aufwändig nachvollziehen, dann die schon weggelegte Rechnung erneut zur Hand nehmen und die Überweisung erneut tätigen. Mit weiterer Verbreitung von IBAN-Überweisungen, deren Nutzung ab 2013 verpflichtend ist, werden Schreibfehler und insbesondere Tippfehler aufgrund der größeren Länge der IBANs ein noch größeres Problem als bisher.

Bezahldienste, beispielsweise www.PayPal.de, erfordern ein separates Konto mit separatem Login-Vorgang, das seinerseits wieder mit Geld gefüllt werden muss, damit es zum Überweisen verwendet werden kann. Die Bezahldienste sind bei weitem nicht so verbreitet wie die üblichen Bankkonten. Weiterhin fallen bei der Verwendung von Bezahldiensten Transaktionskosten, beispielsweise in Höhe von 2-3 % des Rechnungsbetrags, an, die die Rechnungssteller oder Rechnungszahler getragen werden müssen.

Überweisungdienste, beispielsweise www.Sofortüberweisung.de, bei denen ein Online-Überweisungsformular automatisch vorausgefüllt wird, funktionieren nur in einem reinen Online-Kontext, wenn die Zahlung unmittelbar zu einem zuvor online getätigtem Kauf gehört. Dazu leitet das Online-Geschäft (online shop) des Betreibers (Verkäufer) den Besucher (Käufer) des online-Geschäfts während des Bestellvorgangs zum Bezahlen an den online-Dienst des Überweisungsdienstes weiter, wenn der Käufer als Zahlungsmethode Vorauskasse mittels assistierter sofortiger Überweisung von seinem Bankkonto ausgewählt hat. Der Überweisungsdienst fragt dann vom Käufer die Login-Daten für das Bankkonto ab, nimmt die Überweisung vor und fragt dafür noch ein Einmalpasswort (Transaktionsnummer, TAN), beispielsweise mobile TAN (mTAN), für die Überweisung vom Käufer ab. Eine Sofortüberweisung funktioniert nur bei Vorkasse, nicht bei nachträglicher Zahlung und nicht bei Rechnungsstellung auf dem Papierweg. Wenn die Rechnungsstellung separat von einer online-Transaktion erfolgt, beispielsweise bei laufend wiederkehrenden Rechnungen im Rahmen von Dauerverträgen (Telefon, Mobiltelefon, Strom, Gas, Wasser usw.) funktioniert dieses Verfahren also nicht.

Einige Bankautomaten können vorausgefüllte Überweisungsträger optisch erfassen und die erfassten Daten für den Kunden in ein angezeigtes Überweisungsformular übernehmen. Dazu muss der Rechnungszahler den Bankautomaten in der Bank aufsuchen, und die Bank muss die Bankautomaten aufstellen, betreiben, warten und pflegen, was Kosten verursacht.

DE 101 49 298 A1 offenbart ein Verfahren zum elektronischen Zustellen und Begleichen von Rechnungen, wobei im Anschluss an eine beliebig erfolgte Bestellung im Handel die Rechnung papierlos erstellt und beglichen werden kann, unter der Voraussetzung, dass der Kunde über Email verfügt und Home Banking benutzt.

DE 10 2005 054 051 A1 offenbart ein Verfahren zum Belasten von Kundenkonten bei dem rechnungsrelevante Daten elektronisch mittels einem "Online-Rechnungsträger" von einem Datenserver zur Verfügung gestellt werden.

EP 1 729 249 A1 offenbart ein Verfahren zur automatisierten Erstellung und Bearbeitung eines Rechnungsdokuments zur Ausführung eines Zahlungsvorgangs von einem Zahlungsschuldner an einen Zahlungsempfänger, aufweisend Erfassung der zur Ausführung des Zahlungsvorgangs zur Rechnungsbegleichung notwendigen Rechnungsdaten, Erstellung und Ausdrucken eines Rechnungsdokuments Anbringen eines Speicherelements (radio frequency identification Chip, RFID-Chip) an dem Rechnungsdokument, Abspeichern der Rechnungsdaten in dem Speicherelement, Versenden des Rechnungsdokuments mit Speicherelement an den Zahlungsschuldner, Auslesen der Rechnungsdaten von dem Speicherelement durch ein Lesegerät, Übertragung der ausgelesenen Rechnungsdaten an ein automatisiertes Zahlungsverkehrssystem und Ausführung des Zahlungsvorgangs an den Zahlungsempfänger basierend auf den ausgelesenen Rechnungsdaten.

### Aufgabe der Erfindung

Die vorliegende Erfindung hat sich deshalb zur Aufgabe gestellt, ein System, Vorrichtungen, ein Verfahren, ein Medium und ein Computerprogrammprodukt zum Vereinfachen von Transaktionen bereitzustellen.

### Allgemeine Beschreibung der Erfindung

Diese Aufgabe wird durch die beiliegenden nebengeordneten Ansprüche gelöst, insbesondere durch ein System, Vorrichtungen, ein Verfahren, ein Medium und ein Computerprogrammprodukt.

Ein Aspekt der Erfindung betrifft ein System 30; 40; 50; 60 zum Automatisieren einer Transaktion, umfassend einen Rechner 100 zum Erzeugen, mittels Transaktionsdaten der Transaktion, einer Transaktionsaufforderung 700 mit einer System-eindeutigen Transaktionsidentifikationsnummer 710, 7100 für die Transaktion an, auf oder in einem Medium 7, einen Rechner 600, der über eine Kommunikationsverbindung 5₁₋₆ mit dem Rechner 100 zum Erzeugen der Transaktionsaufforderung 700 verbindbar ist, zum Speichern der System-eindeutigen Transaktionsidentifikationsnummer 710, 7100 und von Transaktionserledigungsdaten, ein Endgerät 200 zum Erfassen der System-eindeutigen Transaktionsidentifikationsnummer 710, 7100 von dem Medium 7 und zum Vorbereiten der Transaktion, und einen Rechner 300, der über eine Kommunikationsverbindung 5₂₋₃ mit dem Endgerät 200 verbindbar ist, zum Empfangen und Ausführen der vorbereiteten Transaktion, wobei die System-eindeutige Transaktionsidentifikationsnummer 710, 7100 und die Transaktionserledigungsdaten an den Rechner 600 zum Speichern der System-eindeutigen Transaktionsidentifikationsnummer 710, 7100 und der Transaktionserledigungsdaten übertragen werden, wenn die vorbereitete Transaktion ausgeführt worden ist. Ein weiterer Aspekt der Erfindung betrifft ein System 30; 40; 50; 60 zum Automatisieren einer Transaktion, umfassend einen Rechner 100 zum Erzeugen, mittels Transaktionsdaten der Transaktion, einer Transaktionsaufforderung 700 mit einer System-eindeutigen Transaktionsidentifikationsnummer 710, 7100 für die Transaktion an, auf oder in einem Medium 7, einen Rechner 600, der über eine Kommunikationsverbindung 5₁₋₆ mit dem Rechner 100 zum Erzeugen der Transaktionsaufforderung 700 verbindbar ist, zum Speichern der System-eindeutigen Transaktionsidentifikationsnummer 710, 7100 und von Transaktionserledigungsdaten, ein Endgerät 200 zum Erfassen der System-eindeutigen Transaktionsidentifikationsnummer 710, 7100 von dem Medium 7 und zum Vorbereiten der Transaktion, und einen Rechner 300, der über eine Kommunikationsverbindung 5₂₋₃ mit dem Endgerät 200 verbindbar ist, zum Empfangen und Ausführen der vorbereiteten Transaktion, wobei die System-eindeutige Transaktionsidentifikationsnummer 710, 7100 und die Transaktionserledigungsdaten an den Rechner 100 zum Erzeugen der Transaktionsaufforderung 700 übertragen werden, wenn die vorbereitete Transaktion ausgeführt worden ist. Durch die Übertragung der System-eindeutigen Transaktionsidentifikationsnummer 710, 7100 und der Transaktionserledigungsdaten an den Rechner 100 zum Erzeugen der Transaktionsaufforderung 700 wird eine Umsetzung rechtlicher Vorgaben, insbesondere des Datenschutzrechtes, erleichtert. Das Endgerät 200 kann beispielsweise als Rechner (computer), beispielsweise Laptop-Computer, Notebook-Computer oder Tablett-Computer, oder mobiles Endgerät, beispielsweise Mobiltelefon wie Smartphone, ausgebildet sein und ein Programm (Applikation, application), beispielsweise Anwendungsprogramm oder Anwendungsprogramm für ein Mobiltelefon (App, mobile app), wie einen Internet-Browser oder eine Banking-Software, umfassen. Zur Erhöhung der Sicherheit vor Manipulationen können einzelne oder alle Verbindungen, beispielsweise mittels Public/Private-Key Verschlüsselung oder HTTPS, verschlüsselt sein.

Ein weiterer Aspekt der Erfindung betrifft ein System 30; 40; 50; 60, wobei ein Code die System-eindeutige Transaktionsidentifikationsnummer 710, 7100 codiert.

Ein weiterer Aspekt der Erfindung betrifft ein System 30; 40; 50; 60, wobei der Code die Transaktionsdaten codiert. Dabei kann der Code eine Formel zur Berechnung des Rechnungs-, Zahlungs-, Überweisungsbetrags codieren. Weiterhin kann der Code eine Kennzeichnung (tag) zur Klassifizierung der Transaktion, beispielsweise als Forderung, codieren. Die Kennzeichnung kann eine eindeutige Identifikationsnummer umfassen. Somit kann empfängerseitig eine Zuordnung zu einer gewünschten Klasse erfolgen. Die Kennzeichnung kann vom Ersteller der Transaktionsaufforderung festgelegt werden. Alternativ kann ein Kunde dem Ersteller die Kennzeichnung vorgeben. Der Code kann Informationen, die einen Zugriff auf digitale Rechnungsdetails ermöglichen, codieren. Die Rechnungsdetails können beispielsweise in einer Datenbank gespeichert sein. Die Datenbank kann sich beispielsweise beim Ersteller oder in einer zentralen Stelle, wie einem zentralen Server, befinden. Die Informationen können beispielsweise als Verknüpfung (Link) ausgeführt sein. Die Informationen können für verschiedene Zwecke, beispielsweise für eine Erstattung, an andere Stellen, beispielsweise eine Buchhaltung, weitergebbar sein. Die Transaktionsdaten können beispielsweise als Datensatz mit Datenfeldern, wie strukturierter Datensatz (Datenstruktur), vordefinierte Abfolge von Datenfeldern wie Komma-getrennte Werte (comma-separated values, CSV), wobei bei einem fehlenden Datenwert das entsprechende Datenfeld leer bleibt, oder Wertepaare, oder freiwählbare Abfolge von Datenfeldern, wobei jedes Datenfeld einen Datenbezeichner und Datenwert umfasst, vorliegen.

Ein weiterer Aspekt der Erfindung betrifft ein System 30; 40; 50; 60, wobei der Code maschinenerfassbar, beispielsweise maschinenlesbar, wie optisch maschinenlesbar, ist. Ein anderer Aspekt der Erfindung betrifft ein System 30; 40; 50; 60, wobei der Code eine Fehlererkennung oder Fehlerkorrektur ermöglicht. Ein anderer Aspekt der Erfindung betrifft ein System 30; 40; 50; 60, wobei der Code ein 1D-Code, beispielsweise Strichcode Barcode, oder 2D-Code, beispielsweise Codablock, Code 49, PDF417, Matrix-Code, QR-Code, DataMatrix, MaxiCode, Aztec-Code, Punktcode Dotcode oder RM4SC-Code, ist.

Ein weiterer Aspekt der Erfindung betrifft ein System 30; 40; 50; 60, wobei die System-eindeutige Transaktionsidentifikationsnummer 710, 7100 von dem Rechner 100 zum Erzeugen der Transaktionsaufforderung 700 erzeugt wird.

Ein weiterer Aspekt der Erfindung betrifft ein System 30; 40; 50; 60, wobei die System-eindeutige Transaktionsidentifikationsnummer 710, 7100 von dem Rechner 600 zum Speichern der System-eindeutigen Transaktionsidentifikationsnummer 710, 7100 erzeugt wird. Ein anderer Aspekt der Erfindung betrifft ein System 30; 40; 50; 60, wobei der Rechner 100 zum Erzeugen der Transaktionsaufforderung 700 die System-eindeutige Transaktionsidentifikationsnummer 710, 7100 von dem Rechner 600 zum Speichern der System-eindeutigen Transaktionsidentifikationsnummer 710, 7100 anfordert oder der Rechner 600 zum Speichern der System-eindeutigen Transaktionsidentifikationsnummer 710, 7100 die System-eindeutige Transaktionsidentifikationsnummer 710, 7100 dem Rechner 100 zum Erzeugen der Transaktionsaufforderung 700 zuweist. Ein anderer Aspekt der Erfindung betrifft ein System 30; 40; 50; 60, wobei die System-eindeutige Transaktionsidentifikationsnummer 710, 7100 von dem Rechner 600 zum Speichern der System-eindeutigen Transaktionsidentifikationsnummer 710, 7100 über die Kommunikationsverbindung 5₁₋₆ an den Rechner 100 zum Erzeugen der Transaktionsaufforderung 700 übertragen wird.

Ein weiterer Aspekt der Erfindung betrifft ein System 30; 40; 50; 60, wobei die System-eindeutige Transaktionsidentifikationsnummer 710, 7100 erzeugt wird mittels einer Transaktionsidentifikationsnummernberechungsformel, beispielsweise einer Berechnungsformel für Pseudo-Zufallszahlen. Ein anderer Aspekt der Erfindung betrifft ein System 30; 40; 50; 60, wobei die System-eindeutige Transaktionsidentifikationsnummer 710, 7100 erzeugt wird unter Berücksichtigung der Transaktionsdaten, beispielsweise einer System-eindeutigen Identifikationsnummer eines Begünstigten. Ein anderer Aspekt der Erfindung betrifft ein System 30; 40; 50; 60, wobei die System-eindeutige Transaktionsidentifikationsnummer 710, 7100 erzeugt wird als einzelne System-eindeutige Transaktionsidentifikationsnummer 710, 7100 oder als eine von einer Vielzahl von System-eindeutigen Transaktionsidentifikationsnummern, beispielsweise als eine Gruppe von 50, 100 oder 200 System-eindeutigen Transaktionsidentifikationsnummer. Ein anderer Aspekt der Erfindung betrifft ein System 30; 40; 50; 60, wobei die System-eindeutige Transaktionsidentifikationsnummer 710, 7100 erzeugt wird unmittelbar vor oder während des Erzeugens der Transaktionsaufforderung 700 oder vorab.

Ein weiterer Aspekt der Erfindung betrifft ein System 30; 40; 50; 60, wobei das Endgerät 200 über eine Kommunikationsverbindung 5₂₋₆ mit dem Rechner 600 zum Speichern der System-eindeutigen Transaktionsidentifikationsnummer 710, 7100 und der Transaktionserledigungsdaten verbindbar ist, und die System-eindeutige Transaktionsidentifikationsnummer 710, 7100 und die Transaktionserledigungsdaten von dem Endgerät 200 an den Rechner 600 zum Speichern der System-eindeutigen Transaktionsidentifikationsnummer 710, 7100 und der Transaktionserledigungsdaten übertragen werden.

Ein weiterer Aspekt der Erfindung betrifft ein System 30; 40; 50; 60, wobei der Rechner 600 zum Speichern der System-eindeutigen Transaktionsidentifikationsnummer 710, 7100 und der Transaktionserledigungsdaten die Transaktionsdaten speichert, und das Endgerät 200 die gespeicherten Transaktionsdaten mittels der erfassten System-eindeutigen Transaktionsidentifikationsnummer 710, 7100 abfragt und die Transaktion mittels der Transaktionsdaten vorbereitet.

Ein weiterer Aspekt der Erfindung betrifft ein System 30; 40; 50; 60, wobei die System-eindeutige Transaktionsidentifikationsnummer 710, 7100 und/oder die Transaktionsdaten von dem Rechner 100 zum Erzeugen der Transaktionsaufforderung 700 über die Kommunikationsverbindung 5₁₋₆ an den Rechner 600 zum Speichern der System-eindeutigen Transaktionsidentifikationsnummer 710, 7100 und der Transaktionserledigungsdaten übertragen und dort gespeichert werden. Ein anderer Aspekt der Erfindung betrifft ein System 30; 40; 50; 60, wobei die Transaktionsdaten, beispielsweise mittels des Rechners 100 zum Erzeugen der Transaktionsaufforderung 700, geändert werden und die System-eindeutige Transaktionsidentifikationsnummer 710, 7100 und/oder die geänderten Transaktionsdaten, beispielsweise von dem Rechner 100 zum Erzeugen der Transaktionsaufforderung 700 über die Kommunikationsverbindung 5₁₋₆, an den Rechner 600 zum Speichern der System-eindeutigen Transaktionsidentifikationsnummer 710, 7100 und der Transaktionsdaten übertragen und dort die geänderten Transaktionsdaten aktualisiert werden.

Ein weiterer Aspekt der Erfindung betrifft ein System 30; 40; 50; 60, wobei die Transaktionsdaten in Abhängigkeit von der System-eindeutigen Transaktionsidentifikationsnummer 710, 7100 und/oder einem Transaktionsdatum und/oder einem aktuellen Datum und/oder mittels einer Transaktionsdatenberechungsformel berechenbar oder änderbar, beispielsweise neuberechenbar, sind, die Transaktionsdaten vorzugsweise mittels des Rechners 600 zum Speichern der System-eindeutigen Transaktionsidentifikationsnummer 710, 7100 und der Transaktionserledigungsdaten, vorzugsweise vor oder während des Vorbereitens der Transaktion, berechenbar oder änderbar sind, die Transaktionsdatenberechungsformel vorzugsweise mittels einer Transaktionsdatenberechungsformelidentifikationsnummer identifizierbar ist, und die Transaktionsdatenberechungsformel und die Transaktionsdatenberechungsformelidentifikationsnummer vorzugsweise, beispielsweise in dem Rechner 600 zum Speichern der System-eindeutigen Transaktionsidentifikationsnummer 710, 7100 und der Transaktionserledigungsdaten, speicherbar sind. Mittels der Transaktionsdatenberechungsformel kann beispielsweise die genaue Höhe eines Rechnungsbetrags in Abhängigkeit vom tatsächlichen Zahlungszeitpunkt berechnet werden, so dass ein entsprechender Rabatt oder Skonto eingeräumt werden kann.

Ein weiterer Aspekt der Erfindung betrifft ein System 30; 40; 50; 60, wobei die Transaktionsaufforderung 700 eine Rechnung, beispielsweise eine elektronische Rechnung, ist.

Ein weiterer Aspekt der Erfindung betrifft ein System 30; 40; 50; 60, wobei die Transaktion eine Überweisung, beispielsweise eine Banküberweisung, oder ein Dauerauftrag, beispielsweise ein Bankdauerauftrag, ist.

Ein weiterer Aspekt der Erfindung betrifft ein System 30; 40; 50; 60, wobei die Transaktionsdaten einen Transaktionsaufforderungsbetrag 730, beispielsweise einen Rechnungsbetrag, Zahlungsbetrag, oder Überweisungsbetrags, umfassen. Ein anderer Aspekt der Erfindung betrifft ein System 30; 40; 50; 60, wobei die Transaktionsdaten einen Verwendungszweck umfassen. Ein anderer Aspekt der Erfindung betrifft ein System 30; 40; 50; 60, wobei die Transaktionsdaten ein Transaktionsfälligkeitsdatum 735, beispielsweise ein Zahlungszieldatum, erstes Ausführungsdatum, letztes Ausführungsdatum, oder eine Zahlungswiederholungsfrequenz, umfassen. Ein anderer Aspekt der Erfindung betrifft ein System 30; 40; 50; 60, wobei die Transaktionsdaten eine Finanzdienstleistungsverbindung 740, beispielsweise eine Bankverbindung umfassen, die beispielsweise einen Namen eines Begünstigten, eine Kontonummer wie Bankkontonummer des Begünstigen, eine internationale Bankkontonummer (international bank account number, IBAN) des Begünstigen, einen Namen einer Bank des Begünstigten, eine Bankleitzahl (BLZ) der Bank, ein Geschäftskennzeichen (business identifier code, BIC) der Bank, umfassen. Ein anderer Aspekt der Erfindung betrifft ein System 30; 40; 50; 60, wobei die Transaktionsdaten eine weitere Finanzdienstleistungsverbindung 745, 7450, beispielsweise eine weitere Bankverbindung, umfassen.

Ein weiterer Aspekt der Erfindung betrifft ein System 30; 40; 50; 60, wobei die gespeicherten Transaktionserledigungsdaten bezogen auf den Rechner 100 zum Erzeugen der Transaktionsaufforderung 700 auswertbar sind. Somit kann beispielsweise der Rechner 600 zum Speichern der System-eindeutigen Transaktionsidentifikationsnummer 710, 7100 und der Transaktionserledigungsdaten im Rahmen von Auswertungen (Reportings) Berichte (reports) über Erledigungsdaten bezogen auf den Rechnungsersteller erzeugen und an den Rechnungssteller oder, soweit rechtlich zulässig, an Informationsdienste wie Wirtschaftsinformationsdatenbanken übermitteln. Somit kann der Rechnungssteller die ihn betreffenden Zahlungseingänge überwachen, analysieren und, beispielsweise über die Zeit, vergleichen. Ein Informationsdienst kann Zahlungseingänge verschiedener Rechnungssteller überwachen, analysieren und beispielsweise zwischen den Rechnungsstellern vergleichen. Somit können gute Zahlungseingänge und Vergleichswerte eine bessere Einstufung (rating) des Rechnungsstellers bewirken. Die Entgegennahme der Transaktion kann dem Rechnungssteller gemeldet werden. Die Rückmeldung kann von dem Endgerät 200, beispielsweise bei Aufgabe der Transaktion, oder dem Rechner 300, beispielsweise bei oder nach Ausführung der Transaktion, erfolgen. Die Rückmeldung kann direkt an den Rechner 100 des Rechnungsstellers erfolgen. Alternativ kann die Rückmeldung an den Rechner 600 erfolgen. Dabei kann der Rechnungssteller die Erledigungsdaten selbst vom Rechner 600 abrufen, oder der Rechner 600 übermittelt die Erledigungsdaten von sich aus, beispielsweise unmittelbar bei Vorliegen neuer Erledigungsdaten, in regelmäßigen Zeitabständen oder bei einer definierten Anzahl von Erledigungsdatensätzen, an den Rechner 100 des Rechnungsstellers. Die Erledigungsdaten können beispielsweise die Transaktionsidentifikationsnummer 710, 7100, das Zahlungsdatum und/oder den Zahlungsbetrag ggf. unter Berücksichtigung von Nachlass (discount) oder Teilzahlung umfassen.

Ein weiterer Aspekt der Erfindung betrifft einen Rechner 100 zum Automatisieren einer Transaktion, wobei der Rechner 100 zum Erzeugen, mittels Transaktionsdaten der Transaktion, einer Transaktionsaufforderung 700 mit einer System-eindeutigen Transaktionsidentifikationsnummer 710, 7100 für die Transaktion an, auf oder in einem Medium 7 ausgebildet ist, und der Rechner 100 in dem erfindungsgemäßen System 30; 40; 50; 60 verwendbar ist.

Ein weiterer Aspekt der Erfindung betrifft einen Rechner 600 zum Automatisieren einer Transaktion, wobei der Rechner 600 zum Speichern einer System-eindeutigen Transaktionsidentifikationsnummer 710, 7100 und von Transaktionserledigungsdaten ausgebildet ist, und der Rechner 600 in dem erfindungsgemäßen System 30; 40; 50; 60 verwendbar ist.

Ein weiterer Aspekt der Erfindung betrifft ein Endgerät 200 zum Automatisieren einer Transaktion, wobei das Endgerät 200 zum Erfassen einer System-eindeutigen Transaktionsidentifikationsnummer 710, 7100 von einem Medium 7 und zum Vorbereiten der Transaktion ausgebildet ist, und das

Endgerät 200 in dem erfindungsgemäßen System 30; 40; 50; 60 verwendbar ist.

Ein weiterer Aspekt der Erfindung betrifft einen Rechner 300 zum Automatisieren einer Transaktion, wobei der Rechner 300 zum Empfangen und Ausführen einer vorbereiteten Transaktion ausgebildet ist, und der Rechner 300 in dem erfindungsgemäßen System 30; 40; 50; 60 verwendbar ist.

Ein weiterer Aspekt der Erfindung betrifft ein Medium 7 zum Automatisieren einer Transaktion, wobei das Medium 7 eine Transaktionsaufforderung 700 mit einer System-eindeutigen Transaktionsidentifikationsnummer 710, 7100 für die Transaktion umfasst, und das Medium 7 in dem erfindungsgemäßen System 30; 40; 50; 60 verwendbar ist.

Ein weiterer Aspekt der Erfindung betrifft ein Verfahren zum Automatisieren einer Transaktion, umfassend Erzeugen, mittels Transaktionsdaten der Transaktion, einer Transaktionsaufforderung 700 mit einer System-eindeutigen Transaktionsidentifikationsnummer 710, 7100 für die Transaktion an, auf oder in einem Medium 7 mit einem einen Rechner 100, Speichern der System-eindeutigen Transaktionsidentifikationsnummer 710, 7100 und Transaktionserledigungsdaten auf einen Rechner 600, der über eine Kommunikationsverbindung 5₁₋₆ mit dem Rechner 100 zum Erzeugen der Transaktionsaufforderung 700 verbindbar ist, Erfassen der System-eindeutigen Transaktionsidentifikationsnummer 710, 7100 von dem Medium 7 und Vorbereiten der Transaktion mit einem Endgerät 200, und Empfangen und Ausführen der vorbereiteten Transaktion mit einem einen Rechner 300, der über eine Kommunikationsverbindung 5₂₋₃ mit dem Endgerät 200 verbindbar ist, wobei die System-eindeutige Transaktionsidentifikationsnummer 710, 7100 und die Transaktionserledigungsdaten an den Rechner 600 zum Speichern der System-eindeutigen Transaktionsidentifikationsnummer 710, 7100 und der Transaktionserledigungsdaten übertragen werden, wenn die vorbereitete Transaktion ausgeführt worden ist. Ein weiterer Aspekt der Erfindung betrifft ein Verfahren zum Automatisieren einer Transaktion, umfassend Erzeugen, mittels Transaktionsdaten der Transaktion, einer Transaktionsaufforderung 700 mit einer System-eindeutigen Transaktionsidentifikationsnummer 710, 7100 für die Transaktion an, auf oder in einem Medium 7 mit einem einen Rechner 100, Speichern der System-eindeutigen Transaktionsidentifikationsnummer 710, 7100 und Transaktionserledigungsdaten auf einen Rechner 600, der über eine Kommunikationsverbindung 5₁₋₆ mit dem Rechner 100 zum Erzeugen der Transaktionsaufforderung 700 verbindbar ist, Erfassen der System-eindeutigen Transaktionsidentifikationsnummer 710, 7100 von dem Medium 7 und Vorbereiten der Transaktion mit einem Endgerät 200, und Empfangen und Ausführen der vorbereiteten Transaktion mit einem einen Rechner 300, der über eine Kommunikationsverbindung 5₂₋₃ mit dem Endgerät 200 verbindbar ist, wobei die System-eindeutige Transaktionsidentifikationsnummer 710, 7100 und die Transaktionserledigungsdaten an den Rechner (100) zum Erzeugen der Transaktionsaufforderung (700) übertragen werden, wenn die vorbereitete Transaktion ausgeführt worden ist.

Ein weiterer Aspekt der Erfindung betrifft ein Computerprogrammprodukt, umfassend ein Computerprogramm, das auf einem Datenträger oder in einem Speicher eines Rechners 100, 300, 600 oder Endgeräts 200 gespeichert ist und das von dem Rechner 100, 300, 600 oder Endgerät 200 lesbare Befehle umfasst, die zur Ausführung des erfindungsgemäßen Verfahrens bestimmt sind, wenn die Befehle auf dem Rechner 100, 300, 600 oder Endgerät 200 ausgeführt werden. Das Computerprogramm kann auch auf einem Speichermedium gespeichert sein oder es kann über ein entsprechendes Netzwerk von einem Server heruntergeladen werden.

Weiterhin können Aspekte der Erfindung miteinander kombiniert sein.

### Kurze Beschreibung der Figuren

In der folgenden detaillierten Beschreibung werden die Merkmale, Vorteile und alternativen Ausführungsformen von Ausführungsbeispielen der Erfindung mit Bezug auf die beigefügten Figuren beschrieben, in denen ähnliche Bezugszeichen ähnliche Elemente kennzeichnen.

Es zeigen, in vereinfachter Darstellung:
Fig. 1 ein Transaktionssystem gemäß dem Stand der Technik,
Fig. 2 ein Transaktionssystem mit Rückkanal gemäß einer Ausführungsform der Erfindung,
Fig. 3 ein Transaktionssystem mit Rückkanal gemäß einer anderen Ausführungsform der Erfindung,
Fig. 4 ein Transaktionssystem mit Rückkanal gemäß einer weiteren Ausführungsform der Erfindung,
Fig. 5 ein Transaktionssystem mit Rückkanal gemäß einer weiteren Ausführungsform der Erfindung, und
Fig. 6 ein Medium gemäß einer Ausführungsform der Erfindung.

### Detaillierte Beschreibung der Ausführungsformen

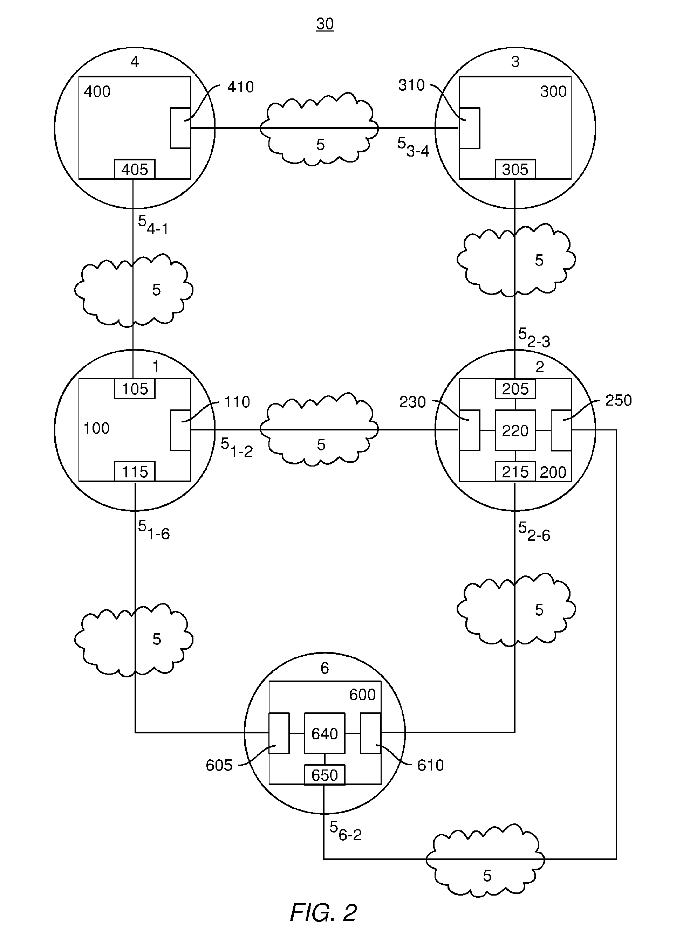

Fig. 2 zeigt ein Transaktionssystem 30 mit Rückkanal gemäß einer Ausführungsform der Erfindung, umfassend einem Sender 1 einer Transaktionsaufforderung 700, beispielsweise einen Rechnungssteller, ggf. Zahlungsempfänger, einem Empfänger 2 der Transaktionsaufforderung 700, beispielsweise einen Rechnungsempfänger, ggf. Zahlungssender bzw. Zahlungspflichtigen, einen Finanzdienstleister 3 des Empfängers, beispielsweise eine Bank des Rechnungsempfängers bzw. Zahlungssenders, einen Finanzdienstleister 4 des Senders, beispielsweise eine Bank des Rechnungsstellers bzw. Zahlungsempfängers, und einen Transaktionsdatendienstleister 6, die über ein Kommunikationsnetzwerk 5, beispielsweise ein heterogenes Kommunikationsnetzwerk wie Post und Telekommunikation und/oder das Internet, miteinander in Verbindung stehen.

Der Sender 1 hat einen Rechner 100 umfassend eine Schnittstelle 105, beispielsweise eine Kommunikationsschnittstelle, eine Ausgabeeinrichtung 110, beispielsweise einen Drucker wie Laserdrucker oder Tintenstrahldrucker, eine weitere Schnittstelle 115, beispielsweise eine Kommunikationsschnittstelle. Der Sender 2 erzeugt die Transaktionsaufforderung auf dem Medium 7 und übermittelt das Medium 7 über eine Kommunikationsverbindung 5₁₋₂ an den Empfänger 2. Der Empfänger 2 hat ein Endgerät 200, beispielsweise einen Rechner wie einen Desktop-Computer, Laptop-Computer, Notebook-Computer, Palmtop-Computer oder Tablett-Computer, oder Kommunikationsendgerät wie Telekommunikationsendgerät insbesondere Mobiltelefon oder Smartphone. Das Endgerät 200 umfasst eine Schnittstelle 205, beispielsweise eine Kommunikationsschnittstelle, eine weitere Schnittstelle 215, beispielsweise eine Kommunikationsschnittstelle, eine Transaktionsverarbeitungseinrichtung 220 und eine Erfassungseinrichtung 230, beispielsweise eine optische Erfassungseinrichtung wie eine Bilderfassungseinrichtung insbesondere eine Kameraeinrichtung, eine Kamera oder einen Scanner. Die Transaktionsverarbeitungseinrichtung 220 kann als Prozessor ausgebildet sein, der in einem Speicher gespeicherte Befehle ausführt. Der Finanzdienstleister 3 des Empfängers hat einen Rechner 300 umfassend eine Schnittstelle 305, beispielsweise eine Kommunikationsschnittstelle, und eine weitere Schnittstelle 310, beispielsweise eine Kommunikationsschnittstelle, wobei der Rechner 300 mittels seiner Schnittstelle 305 über eine Kommunikationsverbindung 5₂₋₃ mit der Schnittstelle 205 des Endgeräts 200 des Empfängers 2 verbunden ist. Der Finanzdienstleister 4 des Rechnungsstellers hat einen Rechner 400 umfassend eine Schnittstelle 405, beispielsweise eine Kommunikationsschnittstelle, und eine weitere Schnittstelle 410, beispielsweise eine Kommunikationsschnittstelle, wobei der Rechner 400 mittels seiner Schnittstelle 405 über eine Kommunikationsverbindung 5₄₋₁ mit der Schnittstelle 105 des Rechners 100 des Senders 1 und mittels seiner Schnittstelle 410 über eine Kommunikationsverbindung 5₃₋₄ mit der Schnittstelle 310 des Rechners 300 der Bank 3 des Empfängers 2 verbunden sind. Der Transaktionsdatendienstleister 6 hat einen Rechner 600, beispielsweise einen Server, umfassend eine Schnittstelle 605, beispielsweise eine Kommunikationsschnittstelle, und eine Transaktionsdatenverarbeitungseinrichtung 640, wobei der Rechner 600 mittels seiner Schnittstelle 605 über eine Kommunikationsverbindung 5₁₋₆ mit der Schnittstelle 115 des Rechners 100 des Senders 1 verbunden ist. Die Transaktionsdatenverarbeitungseinrichtung 640 kann als Prozessor ausgebildet sein, der in einem Speicher gespeicherte Befehle ausführt. Die Befehle können beispielsweise eine Tabelle oder Datenbank implementieren, die in dem Speicher oder einem Datenspeicher die System-eindeutige Transaktionsidentifikationsnummer 710, 7100 und jeweils zugehörige Daten speichern. Der Speicher bzw. Datenspeicher kann als flüchtiger Speicher, beispielsweise als random-access memory (RAM), nichtflüctiger Speicher, beispielsweise Festplatte oder solid-state drive (SSD), oder einer Kombination davon ausgebildet sein. Der Rechner 600 kann weiterhin eine weitere Schnittstelle 610, beispielsweise eine Kommunikationsschnittstelle, umfassen, so dass der Rechner 600 dann mittels seiner Schnittstelle 610 über eine Kommunikationsverbindung 5₂₋₆ auch mit der Schnittstelle 215 des Endgeräts 200 des Empfängers 2 verbunden ist.

Gemäß einem Aspekt der Erfindung automatisiert das Transaktionssystem 30 wie im Folgenden beschrieben. Der Rechner 100 des Senders 1 erzeugt, mittels Transaktionsdaten der Transaktion, die Transaktionsaufforderung 700 mit der System-eindeutigen Transaktionsidentifikationsnummer 710, 7100 für die Transaktion an, auf oder in dem Medium 7. Der Rechner 600 des Transaktionsdatendienstleisters 6, speichert die System-eindeutige Transaktionsidentifikationsnummer 710, 7100 und Transaktionserledigungsdaten. Das Endgerät 200 erfasst die System-eindeutige Transaktionsidentifikationsnummer 710, 7100 von dem Medium 7 und bereitet die Transaktion vor. Der Rechner 300 des Finanzdienstleisters 3 des Empfängers 2, empfängt die vorbereitete Transaktion und führt sie aus, wobei die System-eindeutige Transaktionsidentifikationsnummer 710, 7100 und die Transaktionserledigungsdaten an den Rechner 600 des Transaktionsdatendienstleisters 6 übertragen werden, wenn die vorbereitete Transaktion ausgeführt worden ist.

Die System-eindeutige Transaktionsidentifikationsnummer 710, 7100 kann mittels eines Codes codiert sein. Die Transaktionsdaten können codiert sein. Eine Formel zur Berechnung des Rechnungs-, Zahlungs-, Überweisungsbetrags kann codiert sein. Eine Kennzeichnung (tag) zur Klassifizierung der Transaktion, beispielsweise als Forderung, als Telefonrechnung, Arztrechnung, Einkaufsrechnung, Mietforderung, Steuerforderung, Bußgeldforderung etc. kann codiert sein. Die Kennzeichnung kann eine eindeutige Identifikationsnummer umfassen. Somit kann empfängerseitig eine Zuordnung zu einer gewünschten Klasse erfolgen. Die Kennzeichnung kann vom Sender 1 festgelegt werden. Alternativ kann ein Empfänger 2 dem Sender 1 die Kennzeichnung vorgeben. Informationen, die einen Zugriff auf digitale Rechnungsdetails ermöglichen, können codiert sein. Die Rechnungsdetails können beispielsweise in einer Datenbank gespeichert sein. Die Datenbank kann sich beispielsweise beim Sender 1 oder Transaktionsdatendienstleister 6 befinden. Die Informationen können beispielsweise als Verknüpfung (Link) ausgeführt sein. Die Informationen können für verschiedene Zwecke, beispielsweise für eine Erstattung, an andere Stellen, beispielsweise eine Buchhaltung, weitergebbar sein. Die Transaktionsdaten können beispielsweise als Datensatz mit Datenfeldern, wie strukturierter Datensatz (Datenstruktur), vordefinierte Abfolge von Datenfeldern wie Komma-getrennte Werte (comma-separated values, CSV), wobei bei einem fehlenden Datenwert das entsprechende Datenfeld leer bleibt, oder Wertepaare, oder freiwählbare Abfolge von Datenfeldern, wobei jedes Datenfeld einen Datenbezeichner und Datenwert umfasst, vorliegen. Die Daten können in herkömmlichen Tabellen, herkömmlichen Datenbanken oder in Dateien, beispielsweise im Format einer Auszeichnungssprache (markup language, ML) wie Standard Generalized Markup Language (SGML), Hypertext-Auszeichnungssprache (Hypertext Markup Language, HTML) oder erweiterbarer Auszeichnungssprache (Extensible Markup Language, XML), gespeichert sein. Der Code kann maschinenerfassbar, beispielsweise maschinenlesbar, wie optisch maschinenlesbar, sein. Der Code kann eine Fehlererkennung oder Fehlerkorrektur ermöglichen. Der Code kann beispielsweise ein 1D-Code, beispielsweise Strichcode Barcode, oder 2D-Code, beispielsweise Codablock, Code 49, PDF417, Matrix-Code, QR-Code, DataMatrix, MaxiCode, Aztec-Code, Punktcode Dotcode oder RM4SC-Code, sein.

Die System-eindeutige Transaktionsidentifikationsnummer 710, 7100 kann von dem Rechner 100 erzeugt werden. Die System-eindeutige Transaktionsidentifikationsnummer 710, 7100 kann von dem Rechner 600 erzeugt werden. Der Rechner 100 kann die System-eindeutige Transaktionsidentifikationsnummer 710, 7100 von dem Rechner 600 anfordern oder der Rechner 600 kann die System-eindeutige Transaktionsidentifikationsnummer 710, 7100 dem Rechner 100 zuweisen. Die System-eindeutige Transaktionsidentifikationsnummer 710, 7100 kann von dem Rechner 600 über die Kommunikationsverbindung 5₁₋₆ an den Rechner 100 übertragen werden. Die System-eindeutige Transaktionsidentifikationsnummer 710, 7100 kann mittels einer Transaktionsidentifikationsnummernberechungsformel, beispielsweise einer Berechnungsformel für Pseudo-Zufallszahlen, erzeugt werden. Die System-eindeutige Transaktionsidentifikationsnummer 710, 7100 kann unter Berücksichtigung der Transaktionsdaten, beispielsweise einer System-eindeutigen Identifikationsnummer eines Begünstigten, erzeugt werden. Die System-eindeutige Transaktionsidentifikationsnummer 710, 7100 kann als einzelne System-eindeutige Transaktionsidentifikationsnummer 710, 7100 oder als eine von einer Vielzahl von System-eindeutigen Transaktionsidentifikationsnummern, beispielsweise als eine Gruppe von 50, 100, 200 oder mehr System-eindeutigen Transaktionsidentifikationsnummern, erzeugt werden. Die System-eindeutige Transaktionsidentifikationsnummer 710, 7100 kann unmittelbar vor oder während des Erzeugens der Transaktionsaufforderung 700 oder vorab erzeugt werden. Sie kann aus einer beliebigen digital erfassbaren Zeichenfolge bestehen und ist insbesondere nicht auf Zahlenfolgen beschränkt.

Das Endgerät 200 kann die Transaktionsdaten, beispielsweise codierten Transaktionsdaten erfassen und die Transaktion mittels der erfassten Transaktionsdaten vorbereiten.

Der Rechner 600 kann die Transaktionsdaten speichern. Das Endgerät 200 kann die gespeicherten Transaktionsdaten mittels der erfassten System-eindeutigen Transaktionsidentifikationsnummer 710, 7100, beispielsweise über die Kommunikationsverbindung 5₂₋₆, abfragen und die Transaktion mittels der abgefragten Transaktionsdaten vorbereiten.

Die System-eindeutige Transaktionsidentifikationsnummer 710, 7100 und/oder die Transaktionsdaten können von dem Rechner 100 über die Kommunikationsverbindung 5₁₋₆ an den Rechner 600 übertragen und dort gespeichert werden. Die Transaktionsdaten können, beispielsweise mittels des Rechners 100, geändert werden, die System-eindeutige Transaktionsidentifikationsnummer 710, 7100 und/oder die geänderten Transaktionsdaten können, beispielsweise von dem Rechner 100 über die Kommunikationsverbindung 5₁₋₆, an den Rechner 600 übertragen und dort können die geänderten Transaktionsdaten aktualisiert werden. Die Transaktionsdaten können in Abhängigkeit von der System-eindeutigen Transaktionsidentifikationsnummer 710, 7100 und/oder einem Transaktionsdatum und/oder einem aktuellen Datum und/oder mittels einer Transaktionsdatenberechungsformel berechenbar oder änderbar, beispielsweise neuberechenbar, sein. Die Transaktionsdaten können, vorzugsweise mittels des Rechners 600, vorzugsweise vor oder während des Vorbereitens der Transaktion, berechenbar oder änderbar sein. Die Transaktionsdatenberechungsformel kann, vorzugsweise mittels einer Transaktionsdatenberechungsformelidentifikationsnummer, identifizierbar sein. Die Transaktionsdatenberechungsformel und die Transaktionsdatenberechungsformelidentifikationsnummer können vorzugsweise, beispielsweise in dem Rechner 600, speicherbar sein.

Die Transaktionsaufforderung 700 kann eine Rechnung, beispielsweise eine elektronische Rechnung, sein. Die Transaktion kann eine Überweisung, beispielsweise eine Banküberweisung, oder ein Dauerauftrag, beispielsweise ein Bankdauerauftrag, sein.

Die Transaktionsdaten können einen Transaktionsaufforderungsbetrag 730, beispielsweise einen Rechnungsbetrag, Zahlungsbetrag, oder Überweisungsbetrags, umfassen. Die Transaktionsdaten können einen Verwendungszweck umfassen. Die Transaktionsdaten können ein Transaktionsfälligkeitsdatum 735, beispielsweise ein Zahlungszieldatum, erstes Ausführungsdatum, letztes Ausführungsdatum, oder eine Zahlungswiederholungsfrequenz, umfassen. Die Transaktionsdaten können eine Finanzdienstleistungsverbindung 740, beispielsweise eine Bankverbindung umfassen, die beispielsweise einen Namen eines Begünstigten, eine Kontonummer wie Bankkontonummer des Begünstigen, eine internationale Bankkontonummer (international bank account number, IBAN) des Begünstigen, einen Namen einer Bank des Begünstigten, eine Bankleitzahl (BLZ) der Bank, ein Geschäftskennzeichen (business identifier code, BIC) der Bank, umfassen. Die Transaktionsdaten können eine weitere Finanzdienstleistungsverbindung 745, 7450, beispielsweise eine weitere Bankverbindung, umfassen.

Die gespeicherten Transaktionserledigungsdaten können bezogen auf den Rechner 100 auswertbar sind. Somit kann beispielsweise der Rechner 100 im Rahmen von Auswertungen (Reportings) Berichte (reports) über Erledigungsdaten bezogen auf den Rechnungsersteller erzeugen und an den Rechnungssteller oder Informationsdienste wie Wirtschaftsinformationsdatenbanken übermitteln. Somit kann der Rechnungssteller die ihn betreffenden Zahlungseingänge überwachen, analysieren und, beispielsweise über die Zeit, vergleichen. Ein Informationsdienst kann Zahlungseingänge verschiedener Rechnungssteller überwachen, analysieren und beispielsweise zwischen den Rechnungsstellern vergleichen. Somit können gute Zahlungseingänge und Vergleichswerte eine bessere Einstufung (rating) des Rechnungsstellers bewirken. Die Entgegennahme der Transaktion kann dem Rechnungssteller gemeldet werden. Die Erledigungsdaten können beispielsweise die Transaktionsidentifikationsnummer 710, 7100, das Zahlungsdatum und/oder den Zahlungsbetrag ggf. unter Berücksichtigung von Nachlass (discount) oder Teilzahlung umfassen.

Wie in Fig. 2 gezeigt, umfassen das Endgerät 200 des Empfängers 2 weiterhin eine Schnittstelle 250 für den Rückkanal und der Rechner 600 des Transaktionsdatendienstleisters 6 weiterhin eine Schnittstelle 650 für den Rückkanal, so dass der Rechner 600 mittels seiner Schnittstelle 650 über eine Kommunikationsverbindung 5₆₋₂ mit der Schnittstelle 250 des Endgeräts 200 verbunden ist und die System-eindeutige Transaktionsidentifikationsnummer 710, 7100 und die Transaktionserledigungsdaten von dem Endgerät 200 an den Rechner 600 übertragen werden.

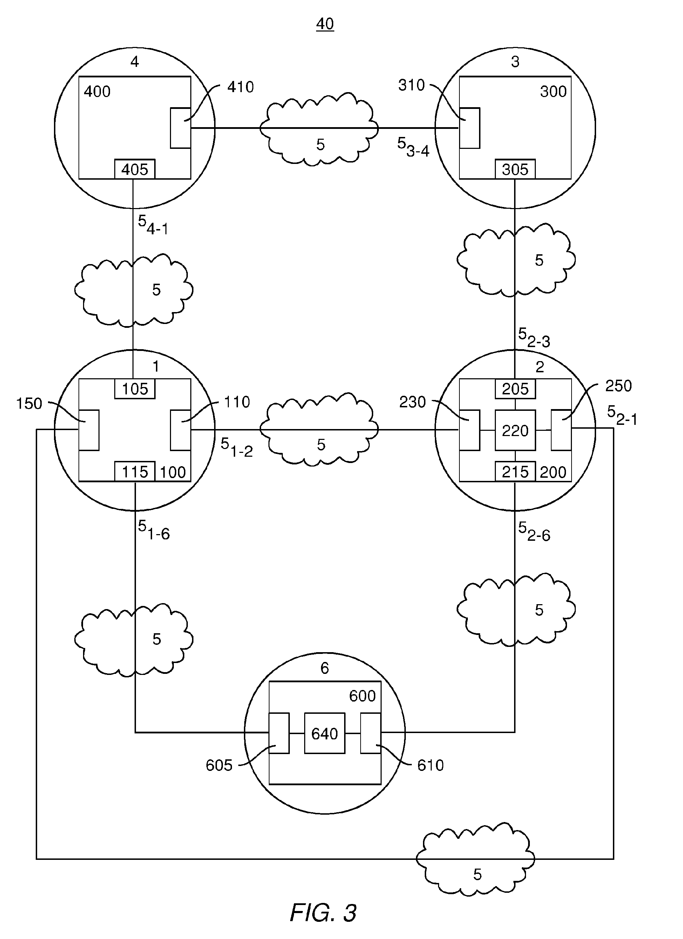

Fig. 3 zeigt, mit Bezug auf Fig. 2, ein Transaktionssystem 40 mit Rückkanal gemäß einer anderen Ausführungsform der Erfindung, wobei das Endgerät 200 des Empfängers 2 weiterhin eine Schnittstelle 250 für den Rückkanal umfasst, der Rechner 100 des Senders 1 weiterhin eine Schnittstelle 150 für den Rückkanal umfasst, der Rechner 100 mittels seiner Schnittstelle 150 über eine Kommunikationsverbindung 5₂₋₁ mit der Schnittstelle 250 des Endgeräts 200 verbunden ist und die System-eindeutige Transaktionsidentifikationsnummer 710, 7100 und die Transaktionserledigungsdaten von dem Endgerät 200 an den Rechner 100 übertragen werden.

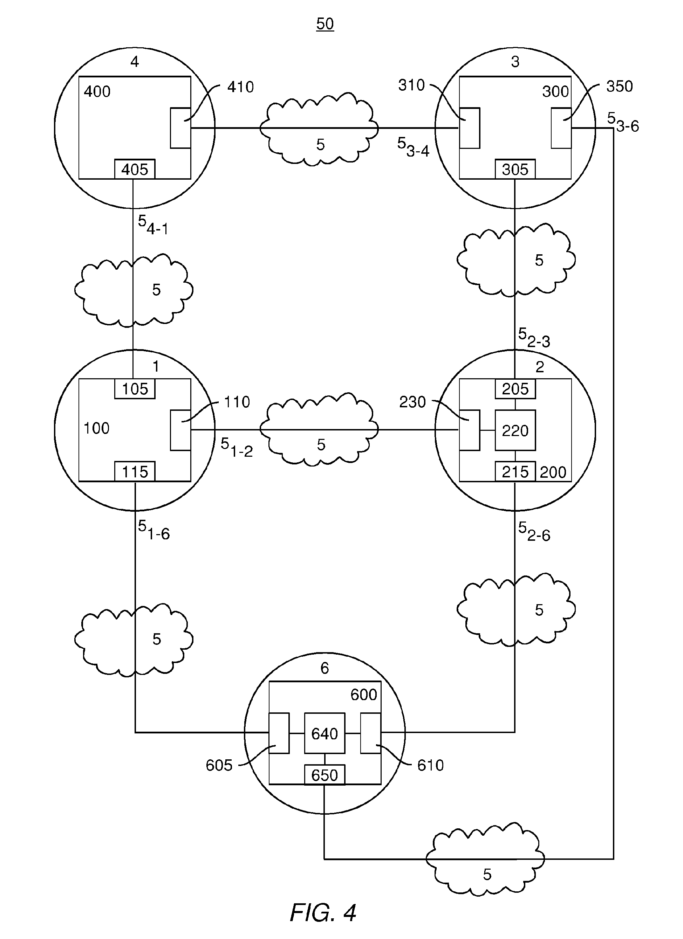

Fig. 4 zeigt, mit Bezug auf Fig. 2, ein Transaktionssystem 50 mit Rückkanal gemäß einer weiteren Ausführungsform der Erfindung, wobei der Rechner 300 des Finanzdienstleisters 3 Empfängers 2 weiterhin eine Schnittstelle 350 für den Rückkanal umfasst, der Rechner 600 des Transaktionsdatendienstleisters 6 weiterhin eine Schnittstelle 650 für den Rückkanal umfasst, der Rechner 600 mittels seiner Schnittstelle 650 über eine Kommunikationsverbindung 5₃₋₆ mit der Schnittstelle 350 des Rechners 300 verbunden ist und die System-eindeutige Transaktionsidentifikationsnummer 710, 7100 und die Transaktionserledigungsdaten von dem Rechner 300 an den Rechner 600 übertragen werden.

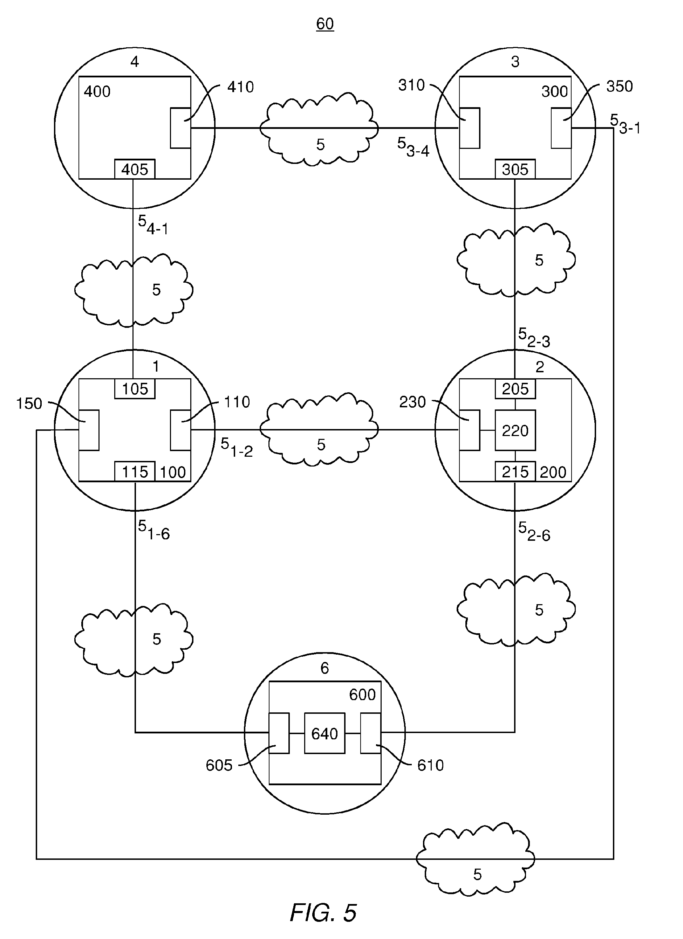

Fig. 5 zeigt, mit Bezug auf Fig. 2, ein Transaktionssystem 60 mit Rückkanal gemäß einer weiteren Ausführungsform der Erfindung, wobei der Rechner 300 des Finanzdienstleisters 3 Empfängers 2 weiterhin eine Schnittstelle 350 für den Rückkanal umfasst, der Rechner 100 des Senders 1 weiterhin eine Schnittstelle 150 für den Rückkanal umfasst, der Rechner 100 mittels seiner Schnittstelle 150 über eine Kommunikationsverbindung 5₃₋₁ mit der Schnittstelle 350 des Rechners 300 verbunden ist und die System-eindeutige Transaktionsidentifikationsnummer 710, 7100 und die Transaktionserledigungsdaten von dem Rechner 300 an den Rechner 100 übertragen werden.

Die Schnittstellen 105, 115, 205, 215, 305, 310, 405, 410, 605, 610 können physische oder logische Schnittstellen sein. In einem Rechner 100, 300, 400, 600 oder Endgerät 200 können mehrere logische Schnittstellen über eine physische Schnittstelle verwirklicht sein. Beispielsweise kann das Endgerät eine Verbindung zum Internet 5 haben. Beispielsweise können die in Fig. 2 gezeigten Kommunikationsverbindungen 5₆₋₂ und 5₂₋₆ als eine Kommunikationsverbindung zwischen dem Endgerät 200 und dem Rechner 600 ausgebildet sein. Die Verbindung kann drahtgebunden, beispielsweise über local area network (LAN), drahtlos, beispielsweise über wireless LAN (WLAN), oder schnurlos, beispielsweise über digital enhanced cordless telecommunications (DECT), oder dergleichen erfolgen.

Die beschriebenen Funktionen der Rechner 100, 200, 300, 400 und 600 müssen nicht zwingend durch fünf physikalisch verschiedene Rechner ausgeführt werden, sie können teilweise auch durch entsprechende Module innerhalb eines Rechners kombiniert werden. Beispielsweise können die Funktionen der Rechner 300 und 400 in einem Rechner ausgeführt werden, wenn die betreffenden Finanzdienstleister dies entsprechend organisiert haben, oder wenn es sich um denselben Finanzdienstleister handelt. Ein anderes Beispiel sind die Rechner 100 und 600, deren Funktionen ebenfalls in einem physikalischen Rechner zusammengefasst sein können.

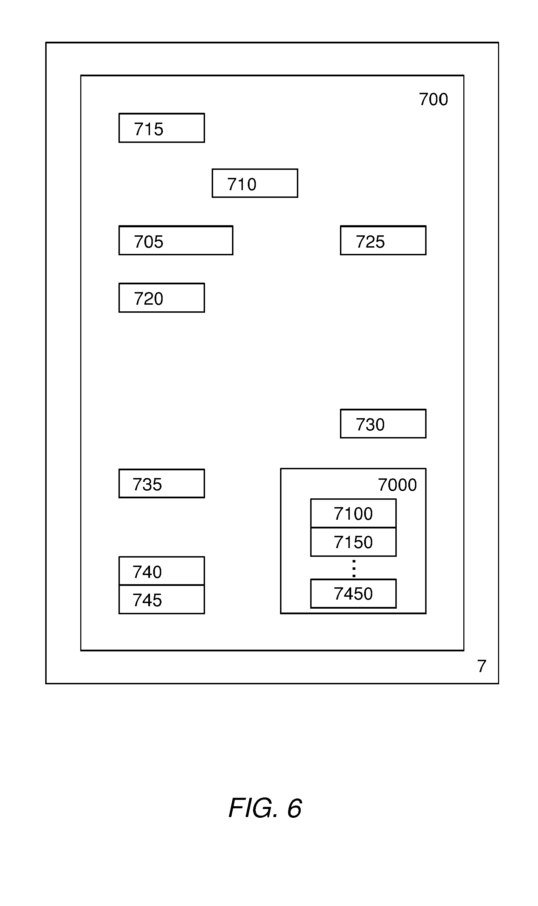

Fig. 6 zeigt ein Medium 7 gemäß einer Ausführungsform der Erfindung mit einer Transaktionsaufforderung 700. Das Medium 7 als ein nichtflüchtiges Medium, beispielsweise ein Blatt wie ein Blatt Papier, oder elektronisches Medium, beispielsweise eine Datei wie eine Bilddatei oder Datei im portablen Dokumentenformat (portable document format file, pdf file), ausgebildet sein. Das nichtflüchtige Medium 7 kann beispielsweise mittels einer Ausgabeeinrichtung, beispielsweise einem Drucker wie einem Laserdrucker oder Tintenstrahldrucker, erzeugt werden. Die Ausgabeeinrichtung kann vorzugsweise nach einem herkömmlichen Verfahren betrieben werden und herkömmliches Papier und herkömmliche Farben, Tinten wie Flüssigtinten, Festtinten, Wachs oder Toner verwenden. Die Transaktionsaufforderung 700 kann beispielsweise eine Rechnung sein. Das Medium 7 kann eine Bezeichnung 705 der Transaktionsaufforderung umfassen. das Medium 7 umfasst eine eindeutige Transaktionsidentifikationsnummer (eindeutige Transaktions-ID, unique transaction identification number, UTID) 710. Das Medium 7 kann eine Bezeichnung 715 des Senders der Transaktionsaufforderung, beispielsweise des Rechnungsstellers, ggf. des Zahlungsempfängers, umfassen. Das Medium 7 kann weiterhin eine Transaktionsaufforderungsnummer 720, beispielsweise eine Rechnungsnummer, umfassen. Das Medium 7 kann ein Transaktionsaufforderungsdatum 725, beispielsweise ein Rechnungsdatum, umfassen. Das Medium 7 kann einen Transaktionsaufforderungsbetrag 730, beispielsweise einen Rechnungsbetrag, umfassen. Das Medium 7 kann ein Transaktionsfälligkeitsdatum 735, beispielsweise ein Zahlungszieldatum, umfassen. Das Medium 7 kann eine Finanzdienstleistungsverbindung 740 des Senders, beispielsweise eine Bankverbindung des Zahlungsempfängers, umfassen. Das Medium 7 kann eine weitere Finanzdienstleistungsverbindung 745 des Senders, beispielsweise eine weitere Bankverbindung des Zahlungsempfängers, umfassen. Das Medium 7 kann weiterhin einen maschinenerfassbaren Code 7000, beispielsweise einen maschinenlesbaren Code wie einen optisch maschinenlesbaren Code, umfassen. Der maschinenerfassbare Code 7000 kann eine codierte eindeutige Transaktionsidentifikationsnummer (codierte eindeutige Transaktions-ID, coded unique transaction identification number, cUTID) 7100 umfassen. Der maschinenerfassbare Code 7000 kann beispielsweise einen codierten Sender 7150 der Transaktionsaufforderung umfassen. Der maschinenerfassbare Code 7000 kann weiterhin eine codierte weitere Finanzdienstleistungsverbindung 7450 des Senders, beispielsweise eine weitere Bankverbindung des Zahlungsempfängers, umfassen.

### Bezugszeichenliste

- 10: Transaktionssystem gemäß dem Stand der Technik
- 30: Transaktionssystem mit Rückkanal gemäß einer Ausführungsform der Erfindung
- 40: Transaktionssystem mit Rückkanal gemäß einer anderen Ausführungsform der Erfindung
- 50: Transaktionssystem mit Rückkanal gemäß einer weiteren Ausführungsform der Erfindung
- 60: Transaktionssystem mit Rückkanal gemäß einer weiteren Ausführungsform der Erfindung
- 1: Sender der Transaktionsaufforderung, z. B. Rechnungssteller, ggf. Zahlungsempfänger
- 100: Rechner des Senders
- 100': Rechner des Senders gemäß dem Stand der Technik
- 105: Schnittstelle, z. B. Kommunikationsschnittstelle
- 110: Ausgabeeinrichtung, z. B. Drucker wie Laserdrucker oder Tintenstrahldrucker
- 115: Schnittstelle, z. B. Kommunikationsschnittstelle
- 150: Schnittstelle, z. B. Kommunikationsschnittstelle, für Rückkanal
- 2: Empfänger der Transaktionsaufforderung, z. B. Rechnungsempfänger, ggf. Zahlungssender bzw. Zahlungspflichtiger
- 200: Endgerät, z. B. Rechner wie Desktop-Computer, Laptop-Computer, Notebook-Computer, Palmtop-Computer oder Tablett-Computer oder Kommunikationsendgerät wie Telekommunikationsendgerät insbesondere Mobiltelefon oder Smartphone, des Empfängers
- 200': Endgerät, z. B. Rechner, des Empfängers gemäß dem Stand der Technik
- 205: Schnittstelle, z. B. Kommunikationsschnittstelle
- 210: Eingabeeinrichtung, z. B. Tastatur
- 215: Schnittstelle, z. B. Kommunikationsschnittstelle
- 220: Transaktionsverarbeitungseinrichtung
- 230: Erfassungseinrichtung, z. B. optische Erfassungseinrichtung wie Bilderfassungseinrichtung insbesondere Kameraeinrichtung, Kamera oder Scanner
- 250: Schnittstelle, z. B. Kommunikationsschnittstelle, für Rückkanal
- 3: Finanzdienstleister des Empfängers, z. B. Bank des Rechnungsempfängers bzw. Zahlungssenders
- 300: Rechner, z. B. Server, des Finanzdienstleisters des Empfängers
- 305: Schnittstelle, z. B. Kommunikationsschnittstelle
- 310: Schnittstelle, z. B. Kommunikationsschnittstelle
- 350: Schnittstelle, z. B. Kommunikationsschnittstelle, für Rückkanal
- 4: Finanzdienstleister des Senders, z. B. Bank des Rechnungsstellers bzw. Zahlungsempfängers
- 400: Rechner, z. B. Server, des Finanzdienstleisters des Senders
- 405: Schnittstelle, z. B. Kommunikationsschnittstelle
- 410: Schnittstelle, z. B. Kommunikationsschnittstelle
- 5: Kommunikationsnetzwerk, z. B. heterogenes Kommunikationsnetzwerk wie Post und Telekommunikation und/oder Internet
- 5₁₋₂: Kommunikationsverbindung zwischen dem Rechner des Senders und dem Endgerät des Empfängers
- 5'₁₋₂: Kommunikationsverbindung zwischen dem Rechner des Senders und dem Empfänger gemäß dem Stand der Technik
- 5₁₋₆: Kommunikationsverbindung zwischen dem Rechner des Senders und dem Rechner des Transaktionsdatendienstleisters
- 5₂₋₁: Kommunikationsverbindung zwischen dem Endgerät des Empfängers und dem Rechner des Senders für einen Rückkanal
- 5₂₋₆: Kommunikationsverbindung zwischen dem Endgerät des Empfängers und dem Rechner des Transaktionsdatendienstleisters
- 5₃₋₁: Kommunikationsverbindung zwischen dem Rechner des Finanzdienstleisters des Empfängers und dem Rechner des Senders für einen Rückkanal
- 5₃₋₄: Kommunikationsverbindung zwischen dem Rechner des Finanzdienstleisters des Empfängers und dem Rechner des Finanzdienstleisters des Senders
- 5₃₋₆: Kommunikationsverbindung zwischen dem Rechner des Finanzdienstleisters des Empfängers und dem Rechner des Transaktionsdatendienstleisters für einen Rückkanal
- 5₄₋₁: Kommunikationsverbindung zwischen dem Rechner des Finanzdienstleisters des Senders und dem Rechner des Senders
- 5₆₋₂: Kommunikationsverbindung zwischen dem Rechner des Transaktionsdatendienstleisters und dem Endgerät des Empfängers für einen Rückkanal
- 6: Transaktionsdatendienstleister
- 600: Rechner, z. B. Server, des Transaktionsdatendienstleisters
- 605: Schnittstelle, z. B. Kommunikationsschnittstelle
- 610: Schnittstelle, z. B. Kommunikationsschnittstelle
- 640: Transaktionsdatenverarbeitungseinrichtung
- 650: Schnittstelle, z. B. Kommunikationsschnittstelle, für Rückkanal
- 7: Medium, nichtflüchtiges Medium, z. B. Blatt wie Blatt Papier, oder elektronisches Medium, z. B. Datei wie Bilddatei, Datei im portablen Dokumentenformat (portable document format file, pdf file)
- 700: Transaktionsaufforderung, z. B. Rechnung
- 705: Bezeichnung der Transaktionsaufforderung
- 710: eindeutige Transaktionsidentifikationsnummer (eindeutige Transaktions-ID, unique transaction identification number, UTID)
- 715: Bezeichnung des Senders der Transaktionsaufforderung, z. B. des Rechnungsstellers, ggf. des Zahlungsempfängers
- 720: Transaktionsaufforderungsnummer, z. B. Rechnungsnummer
- 725: Transaktionsaufforderungsdatum, z. B. Rechnungsdatum
- 730: Transaktionsaufforderungsbetrag, z. B. Rechnungsbetrag
- 735: Transaktionsfälligkeitsdatum, z. B. Zahlungszieldatum
- 740: Finanzdienstleistungsverbindung des Senders, z. B. Bankverbindung des Zahlungsempfängers
- 745: weitere Finanzdienstleistungsverbindung des Senders, z. B. weitere Bankverbindung des Zahlungsempfängers
- 7000: maschinenerfassbarer Code, z. B. maschinenlesbarer Code wie optisch maschinenlesbarer Code
- 7100: codierte eindeutige Transaktionsidentifikationsnummer (codierte eindeutige Transaktions-ID, coded unique transaction identification number, cUTID)
- 7150: codierter Sender der Transaktionsaufforderung
- 7450: codierte weitere Finanzdienstleistungsverbindung des Senders, z. B. weitere Bankverbindung des Zahlungsempfängers

## Patentansprüche

1. System (30; 40; 50; 60) zum Automatisieren einer Transaktion, umfassend:
- einen Rechner (100) zum Erzeugen, mittels Transaktionsdaten der Transaktion, einer Transaktionsaufforderung (700) mit einer System-eindeutigen Transaktionsidentifikationsnummer (710, 7100) für die Transaktion an, auf oder in einem Medium (7),
- einen Rechner (600), der über eine Kommunikationsverbindung (5₁₋₆) mit dem Rechner (100) zum Erzeugen der Transaktionsaufforderung (700) verbindbar ist, zum Speichern der System-eindeutigen Transaktionsidentifikationsnummer (710, 7100) und von Transaktionserledigungsdaten,
- ein Endgerät (200) zum Erfassen der System-eindeutigen Transaktionsidentifikationsnummer (710, 7100) von dem Medium (7) und zum Vorbereiten der Transaktion, und
- einen Rechner (300), der über eine Kommunikationsverbindung (5₂₋₃) mit dem Endgerät (200) verbindbar ist, zum Empfangen und Ausführen der vorbereiteten Transaktion,
wobei:
- die System-eindeutige Transaktionsidentifikationsnummer (710, 7100) und die Transaktionserledigungsdaten an den Rechner (600) zum Speichern der System-eindeutigen Transaktionsidentifikationsnummer (710, 7100) und der Transaktionserledigungsdaten oder an den Rechner (100) zum Erzeugen der Transaktionsaufforderung (700) übertragen werden, wenn die vorbereitete Transaktion ausgeführt worden ist.

2. Das System (30; 40; 50; 60) nach Anspruch 1, wobei:
- ein Code die System-eindeutige Transaktionsidentifikationsnummer (710, 7100) und/oder die Transaktionsdaten codiert.

3. Das System (30; 40; 50; 60) nach Anspruch 2, wobei:
- der Code maschinenerfassbar, beispielsweise maschinenlesbar, wie optisch maschinenlesbar, ist,
- der Code eine Fehlererkennung oder Fehlerkorrektur ermöglicht,
- der Code ein 1D-Code, beispielsweise Strichcode (Barcode), oder 2D-Code, beispielsweise Codablock, Code 49, PDF417, Matrix-Code, QR-Code, DataMatrix, MaxiCode, Aztec-Code, Punktcode (Dotcode) oder RM4SC-Code, ist oder
- eine Kombination davon.

4. Das System (30; 40; 50; 60) nach einem der Ansprüche 1-3, wobei:
- die System-eindeutige Transaktionsidentifikationsnummer (710, 7100) von dem Rechner (100) zum Erzeugen der Transaktionsaufforderung (700) erzeugt wird.

5. Das System (30; 40; 50; 60) nach einem der Ansprüche 1-3, wobei:
- die System-eindeutige Transaktionsidentifikationsnummer (710, 7100) von dem Rechner (600) zum Speichern der System-eindeutigen Transaktionsidentifikationsnummer (710, 7100) erzeugt wird,
- der Rechner (100) zum Erzeugen der Transaktionsaufforderung (700) die System-eindeutige Transaktionsidentifikationsnummer (710, 7100) von dem Rechner (600) zum Speichern der System-eindeutigen Transaktionsidentifikationsnummer (710, 7100) anfordert oder der Rechner (600) zum Speichern der System-eindeutigen Transaktionsidentifikationsnummer (710, 7100) die System-eindeutige Transaktionsidentifikationsnummer (710, 7100) dem Rechner (100) zum Erzeugen der Transaktionsaufforderung (700) zuweist,
- die System-eindeutige Transaktionsidentifikationsnummer (710, 7100) von dem Rechner (600) zum Speichern der System-eindeutigen Transaktionsidentifikationsnummer (710, 7100) über die Kommunikationsverbindung (5₁₋₆) an den Rechner (100) zum Erzeugen der Transaktionsaufforderung (700) übertragen wird, oder
- eine Kombination davon.

6. Das System (30; 40; 50; 60) nach einem der Ansprüche 1-5, wobei die System-eindeutige Transaktionsidentifikationsnummer (710, 7100) erzeugt wird:
- mittels einer Transaktionsidentifikationsnummernberechungsformel, beispielsweise einer Berechnungsformel für Pseudo-Zufallszahlen,
- unter Berücksichtigung der Transaktionsdaten, beispielsweise einer System-eindeutigen Identifikationsnummer eines Begünstigten,
- als einzelne System-eindeutige Transaktionsidentifikationsnummer (710, 7100) oder als eine von einer Vielzahl von System-eindeutigen Transaktionsidentifikationsnummern, beispielsweise als eine Gruppe von 50, 100, 200 oder mehr System-eindeutigen Transaktionsidentifikationsnummern,
- unmittelbar vor oder während des Erzeugens der Transaktionsaufforderung (700) oder vorab, oder
- eine Kombination davon.

7. Das System (30; 40; 50; 60) nach einem der Ansprüche 1-6, wobei:
- der Rechner (600) zum Speichern der System-eindeutigen Transaktionsidentifikationsnummer (710, 7100) und der Transaktionserledigungsdaten die Transaktionsdaten speichert, und
- das Endgerät (200) die gespeicherten Transaktionsdaten mittels der erfassten System-eindeutigen Transaktionsidentifikationsnummer (710, 7100) abfragt und die Transaktion mittels der Transaktionsdaten vorbereitet.

8. Das System (30; 40; 50; 60) nach einem der Ansprüche 1-7, wobei:
- die System-eindeutige Transaktionsidentifikationsnummer (710, 7100) und/oder die Transaktionsdaten von dem Rechner (100) zum Erzeugen der Transaktionsaufforderung (700) über die Kommunikationsverbindung (5₁₋₆) an den Rechner (600) zum Speichern der System-eindeutigen Transaktionsidentifikationsnummer (710, 7100) und der Transaktionserledigungsdaten übertragen und dort gespeichert werden,
- die Transaktionsdaten, beispielsweise mittels des Rechners (100) zum Erzeugen der Transaktionsaufforderung (700), geändert werden und die System-eindeutige Transaktionsidentifikationsnummer (710, 7100) und/oder die geänderten Transaktionsdaten, beispielsweise von dem Rechner (100) zum Erzeugen der Transaktionsaufforderung (700) über die Kommunikationsverbindung (5₁₋₆), an den Rechner (600) zum Speichern der System-eindeutigen Transaktionsidentifikationsnummer (710, 7100) und der Transaktionsdaten übertragen und dort die geänderten Transaktionsdaten aktualisiert werden, oder
- eine Kombination davon.

9. Rechner (100) zum Automatisieren einer Transaktion, wobei:
- der Rechner (100) zum Erzeugen, mittels Transaktionsdaten der Transaktion, einer Transaktionsaufforderung (700) mit einer System-eindeutigen Transaktionsidentifikationsnummer (710, 7100) für die Transaktion an, auf oder in einem Medium (7) ausgebildet ist, und
- der Rechner (100) in dem System (30; 40; 50; 60) nach einem der Ansprüche 1-8 verwendbar ist.

10. Rechner (600) zum Automatisieren einer Transaktion, wobei:
- der Rechner (600) zum Speichern einer System-eindeutigen Transaktionsidentifikationsnummer (710, 7100) und von Transaktionserledigungsdaten ausgebildet ist, und
- der Rechner (600) in dem System (30; 40; 50; 60) nach einem der Ansprüche 1-8 verwendbar ist.

11. Endgerät (200) zum Automatisieren einer Transaktion, wobei:
- das Endgerät (200) zum Erfassen einer System-eindeutigen Transaktionsidentifikationsnummer (710, 7100) von einem Medium (7) und zum Vorbereiten der Transaktion ausgebildet ist, und
- das Endgerät (200) in dem System (30; 40; 50; 60) nach einem der Ansprüche 1-8 verwendbar ist.

12. Rechner (300) zum Automatisieren einer Transaktion, wobei:
- der Rechner (300) zum Empfangen und Ausführen einer vorbereiteten Transaktion ausgebildet ist, und
- der Rechner (300) in dem System (30; 40; 50; 60) nach einem der Ansprüche 1-8 verwendbar ist.

13. Medium (7) zum Automatisieren einer Transaktion, wobei:
- das Medium (7) eine Transaktionsaufforderung (700) mit einer System-eindeutigen Transaktionsidentifikationsnummer (710, 7100) für die Transaktion umfasst, und
- das Medium (7) in dem System (30; 40; 50; 60) nach einem der Ansprüche 1-8 verwendbar ist.

14. Verfahren zum Automatisieren einer Transaktion, umfassend:
- Erzeugen, mittels Transaktionsdaten der Transaktion, einer Transaktionsaufforderung (700) mit einer System-eindeutigen Transaktionsidentifikationsnummer (710, 7100) für die Transaktion an, auf oder in einem Medium (7) mit einem einen Rechner (100),
- Speichern der System-eindeutigen Transaktionsidentifikationsnummer (710, 7100) und Transaktionserledigungsdaten auf einen Rechner (600), der über eine Kommunikationsverbindung (5₁₋₆) mit dem Rechner (100) zum Erzeugen der Transaktionsaufforderung (700) verbindbar ist,
- Erfassen der System-eindeutigen Transaktionsidentifikationsnummer (710, 7100) von dem Medium (7) und Vorbereiten der Transaktion mit einem Endgerät (200), und
- Empfangen und Ausführen der vorbereiteten Transaktion mit einem einen Rechner (300), der über eine Kommunikationsverbindung (5₂₋₃) mit dem Endgerät (200) verbindbar ist,
wobei:
- die System-eindeutige Transaktionsidentifikationsnummer (710, 7100) und die Transaktionserledigungsdaten an den Rechner (600) zum Speichern der System-eindeutigen Transaktionsidentifikationsnummer (710, 7100) und der Transaktionserledigungsdaten oder an den Rechner (100) zum Erzeugen der Transaktionsaufforderung (700) übertragen werden, wenn die vorbereitete Transaktion ausgeführt worden ist.

15. Computerprogrammprodukt, umfassend:
- ein Computerprogramm, das auf einem Datenträger oder in einem Speicher eines Rechners (100, 300, 600) oder Endgeräts (200) gespeichert ist und das von dem Rechner (100, 300, 600) oder Endgerät (200) lesbare Befehle umfasst, die zur Ausführung des Verfahrens gemäß Anspruch 14 bestimmt sind, wenn die Befehle auf dem Rechner (100, 300, 600) oder Endgerät (200) ausgeführt werden.
